# EUROPEAN PATENT APPLICATION

(11) **EP 2 418 237 A1**
(43) Date of publication of application: **15.02.2012**
(21) Application number: 10172573.7
(22) Date of filing: 12.08.2010
(51) Int. Cl.: C08J 5/18, C08L 23/10, C08L 23/16

(54) **Easy tear polypropylene film without notch**

(71) Applicant: Borealis AG, 1220 Vienna (AT)
(72) Inventor: Niedersüß, Peter, 4312, Ried/Riedmark (AT); Wippel, Herbert, 15111, Tangerang (ID)
(74) Representative: Lux, Berthold

(57) **Abstract**

Polypropylene films produced of a highly crystalline polypropylene blended with a high melt strength polypropylene resin and containing an alpha nucleating agent. These films produced with blown film or cast film technology show low tear resistance in machine direction as well as in transversal direction. These materials can be used as films for packaging material.

## Description

### General:

This invention relates to a polypropylene (PP) film produced with blown film or cast film technology from blended PP resins (A and B). The blend for this film is a mixture of highly crystalline polypropylene (A) in combination with a PP based HMS (high melt strength) polymer (resin B) and an α-nucleating agent.

### Description:

The present innovation relates to a mono- or heterophasic polypropylene blown or cast film having good rip and tear properties in machine direction (MD) and in transversal direction (TD), without the need of a notch. Additionally this film has high transparency and a high heat resistance. Furthermore the invention is also related to the process of film making by blown or cast film technology. The above mentioned films can be used as monolayer film, in laminates or in other multilayer film constructions (e.g. as one of the components of blown film).

In the recent years there has been an increasing demand of heat-sealed pouches in a great variety of shapes and sizes.

Two common forms are:
- "pillow-shaped" pouches or "sachets", and
- "gusset" or "stand-up" pouches.
These pouches are considerably lighter and lower cost structures for preserving and protecting foods, condiments, medicines and sterile solutions than other structures, and are in wide spread commercial usage. Typical pouches consist of one or two sheets of laminated material which are sealed together around the periphery, generally by heat-sealing, before or after filling.
One type of laminate that is currently available for use in forming flexible pouches comprises multiple layers.
As it is highly desirable to have the outside of the packages be constituted of a very decorative film, a coated, transparent regenerated cellulose sheeting (or cellophane) having a design printed in reverse on the inner side of the sheet, is generally bonded to a polyolefin layer of the flexible laminated sheet with the printed design in contact therewith. The resulting composite article has wide market appeal because of its attractive appearance, outstanding barrier properties, compatibility with a large variety of products, and moderate cost.

For example U.S. Pat. No. 3,616,190 discloses a laminated packaging material comprising - in order from the outer surface to the inner surface - cellophane, polyethylene, aluminium foil and heat-sealable polyethylene. The cellophane functions both as an outer surface and as a decorative surface, the decorative design being printed in reverse on the inner side of the cellophane sheet.

Especially in Southeast Asian countries laminated structures like PE sealing layer//aluminium//cellophane top layer are used for pharmaceutical packaging. The cellophane layer provides good printability (compared to aluminium), heat resistance and very low tear resistance in MD and especially TD. Additionally it increases the performance of the packaging material in stripping machines, especially with thin aluminium layers.

Cellophane is a very expensive raw material and difficult to be stored and handled under tropical conditions, since it is highly hygroscopic and the characteristics of such a cellophane film vary depending on the season, which makes it difficult to always provide a film having constant quality. In addition, since cellophane film requires use of large amounts of highly toxic substances during the production step thereof, such as sulfuric acid and carbon disulfide, once these flow out, serious environmental pollution may occur. Therefore industry is looking for possibilities to replace it.

A further very well-known problem of such pouches is their opening. To achieve the easy to open feature (easy rip and tearability) normally techniques like notches, V-cuts or laser treatment are used to weaken the material at the edge of the pouch to increase the tearability so that the pouch can be opened without the help of scissors or knives. With these techniques the position of easy tearability is restricted to a certain point and must be indicated on the pouch.

Pharmaceutical packaging like strip packs should be easy to open at any position without the help of any tools, as medicine is often taken at places where no tools are available. In emergency cases, when the patient needs the medicine urgently, easy rip and tear properties are a must.
In addition this feature is also advantageously for several food packaging.

In order to avoid the use of cellophane and to achieve the easy to open feature a great variety of developments have risen up.

Biaxially oriented polypropylene (BOPP) films were produced and achieved an important position in the packaging industry, especially in the packaging of foods, owing to their stiffness, strength, clarity, and moisture barrier properties.
Nevertheless BOPP films, which are known to be good printable, heat resistant and easy tear-able cannot be used for the production of packaging which need to be easy to open with hands from any part of a sealed part (film end) and film edges (film body) without forming notches, as the initial force is extremely high, and therefore a notch must be used.

Several prior art films have been developed to replace BOPP films. One such prior art film is manufactured by coating a polymer film with a resin layer including a propylene copolymer, an alpha-olefin having four or more carbons, and ethylene. The resulting film exhibits inferior tear properties, due to the presence of ethylene and the crystallinity of the polypropylene components. Further, the film necessitates lamination of the resin layer to the polymer film, which further decreases the tearability of the film.

The same problem is valid for other PP cast or blown film known in the state of the art, where the initial tear is too high which results in a too high force for opening the package, even though when a high crystalline PP homopolymer is used. Additionally high crystalline PP homopolymer with MFR above 3 is very difficult to process on blown film lines. A PE based film cannot be used in the top layer as it has by far too low heat resistance.
PET films normally also only provide good rip and tear properties in machine direction and cannot be opened easily without notches.

As an example EP 1 661 935 A1 discloses a cast film or a blown film comprising a composition of a polypropylene matrix and an ethylene-propylene rubber (EPR) whereby the particles of the ethylene-propylene rubber (EPR) in the matrix develop a high orientation in one direction when the film is casted or blown.
The composition comprises:
a) 80 to 95 wt% of a polypropylene matrix (A) with an MFR₂ of 1 to 30 g/10 min being a homopolymer or a copolymer which has a comonomer content of less than 3 wt%;
b) 5 to 20 wt% of an ethylene-propylene rubber (EPR) (B) with at least 55 wt% propylene having an intrinsic viscosity (IV) of 1 to 2.5 dl/g; and
c) 0.0001 to 1 wt% of an alpha-nucleating agent (C).
From the description it can be seen that such films need notches (or a precut) for being easy to open, as the initial tear force would be too high.

According to WO 03/089243 a non-oriented packaging film containing highly crystalline polypropylene (hcPP) with a melt flow greater than 30 g/10 minutes, conventional propylene and a nucleating agent is disclosed. The film may also include color concentrates and film processing additives.
As stated in the description the films are easy to tear once the film is punctured.

EP 1 439 957 describes a non-oriented polypropylene film comprised of a polypropylene composition which film has good mechanical properties, processability and improved water vapour barrier properties.
The polypropylene composition being comprised of a propylene homopolymer and/or a propylene random copolymer which comprises up to 1.5 wt% of one or more C₄-C₈ alpha-olefins and/or ethylene, which polypropylene composition has an isotacticity ;:: 0.96, a crystallization temperature of Tc ≥ 120°C (determined by DSC according to ISO 3146) and a shear thinning index SHI (0/50) ≥ 10 (calculated from the flow curve at 200°C). According to a still further advantageous embodiment of the present invention the polypropylene composition comprises a nucleating agent.
In the description easy to tear without notch is not mentioned, the focus is on water vapour barrier properties. Such pure homopolymer films will be too brittle for most pouch applications.

In WO2005/026240 polypropylene blown films having excellent optical properties, as well as mechanical properties are described. Such blown films comprise a polypropylene composition containing a propylene homopolymer or propylene copolymer with ethylene and/or another α-olefin, the polypropylene composition containing a clarifier comprising one or more phosphate-based α-nucleating agents and/or polymeric α-nucleating agents selected from the group consisting of vinylcycloalkane polymers and vinylalkane polymers.
In the description easy tearability without notch is not mentioned, as the initial tear force will be too high. Furthermore, in case of random copolymer compositions the heat resistance will be insufficient.

W02004/055101 describes a flat film for thermoforming with high toughness, high stiffness and high clarity especially useful for thermoforming applications where high mechanical and optical requirements must be simultaneously met, especially at low temperatures, e. g. for deep freeze applications.
Such films are produced from a polyolefin composition, which polyolefin composition comprises
A) a heterophasic propylene copolymer containing a) 75-95 wt% of a matrix phase comprising a propylene homopolymer or a propylene copolymer with up to 5 mol% of ethylene and/or at least one C₄-C₈ alpha-olefin and b) 5-25 wt% of a disperse phase comprising an ethylene rubber copolymer with from 20-80 mol% ethylene and from 80-20 mol% of at least one C₃-C₈ alpha-olefin and where the intrinsic viscosity of the XCS-fraction of the heterophasic copolymer is ≤ 2 dl/g and B) an α-nucleating agent, the film having a thickness of from 100 to 2000 um and where the process for producing the flat film comprises at least one polishing step.
In the description easy to tear without notch is not mentioned, as the initial tear force will be too high. Furthermore, in case of random copolymer compositions the heat resistance will be insufficient.

Furthermore WO 2009/073685 describes a resin composition containing polypropylene which is capable of use in preparing films by the air quenched blown-film forming technique and which possesses suitable adhesion properties for use as a sealant layer in multi-layer retort pouch packaging applications.

The resin composition includes: (A) from 80 to 98 percent by weight of a coupled impact propylene copolymer comprising: (1) from 77 to 98 percent by weight of a polypropylene homopolymer; and (2) from 2 to 23 percent by weight of an ethylene - alpha olefin interpolymer; and (B) from 2 to 20 percent by weight of a propylene-ethylene copolymer having from 2 to 10 percent by weight units derived from ethylene. The resin composition has a melt flow rate of from 0,1 to 2,5 grams/10 minutes or from 0.3 to 0.9 grams/10 minutes as measured in accordance with ASTM D1238 Condition L (2.16 kg, 230°C).

In the description easy to tear without notch is not mentioned, as such compositions will be too tough for easy opening.

Although already much development work has been done in the field of films suitable for packaging, there is still a need to provide improved films with easy open features, which avoid the necessity of notches or pre-cuts and the like for opening the packaging and have comparable properties to cellophane, like transparency and heat resistance. Therefore it is the object of this invention to provide blown or cast films, having a low rip and tear resistance in machine and transversal direction together with high temperature resistance.

This object was achieved with a mono- or heterophasic blown or cast film comprising a mixture of highly crystalline polypropylene (A) in combination with a PP based HMS (high melt strength) polymer (resin B) and an α-nucleating agent.

Thus, in a first embodiment, the present invention is therefore directed to a blown film or cast film comprising a polypropylene composition comprising
a. 15 to 85 wt% of a highly crystalline polypropylene (A),
b. 15 to 85 wt% of a high melt strength polypropylene (B), and
c. 0.001 to 1.0 wt% of an alpha nucleating agent,
wherein (A) is characterized by a melting temperature of more than 158°C, a crystallinity of the xylene cold insoluble fraction of more than 50% as determined by DSC and a pentad isotacticity of the xylene cold insoluble fraction of more than 96 mol% as determined by ¹³C-NMR spectroscopy, and wherein (B) is characterized by a branching index g' of less than 0.90.

According to the invention the polymer films can be blown or cast films and are produced of a mixture of the following components:
a. A highly crystalline polypropylene (A),
b. Resin B, a high melt strength polypropylene (HMS PP)
c. a α-nucleating agent

The term "polypropylene" denotes a propylene homo- or copolymer or a mixture of such propylene homo- or copolymers.
The term "propylene copolymer" includes heterophasic propylene copolymers, i.e. a mixture of a propylene homopolymer with a propylene/alpha-olefin rubber as well as mixtures of propylene homopolymer and heterophasic propylene copolymers.

### Component A

Component (A) is a highly crystalline polypropylene.

As is understood in the art, the crystallinity of polypropylene can be measured by several methods. For example, the crystallinity of polypropylene can be characterized by the percent by weight of the polypropylene that is soluble in xylene or the crystallinity can be determined with DSC of the xylene cold insoluble fraction.

According to the invention component (A) has a crystallinity of the xylene cold insoluble fraction of more than 50% as determined by DSC in the second heat, preferably of more than 55%, most preferably of more than 58%, and a pentad isotacticity of the xylene cold insoluble fraction as determined by ¹³C-NMR spectroscopy of more than 96 mol%, preferably of more than 97 mol%, most preferably of more than 97.5 mol%.

Preferably, component (A) has a density of at least 850 kg/m³, more preferably of at least 875 kg/m³ and most preferably of at least 900 kg/m³.

Further, preferably, component (A) has a density of not more than 950 kg/m³, more preferably not more than 925 kg/m³ and most preferably of not more than 910 kg/m³.

Preferably, component (A) has a melting point Tm of at least 158°C, more preferably of at least 160°C, most preferably of more than 164°C.

Preferably, component (A) has an MFR₂ measured according to ISO 1133, at 230°C and under a load of 2.16 kg, of at least 0.1 g/10min, more preferably of at least 0.5 g/10 min, even more preferably of at least 1.0 g/10 min and most preferably of at least 1.5 g/10 min.

Further, preferably, component (A) has an MFR₂ measured according to ISO 1133, at 230°C and under a load of 2.16 kg, of not more than 30.0 g/10 min, more preferably of not more than 20.0 g/10 min and most preferably of not more than 15.0 g/10 min.

Component (A) may be a propylene homopolymer with high crystallinity (hcPP).

The expression polypropylene homopolymer as used in this invention relates to a polypropylene that consists substantially, i.e. of at least 97 wt%, preferably of at least 99 wt%, and most preferably of at least 99.8 wt% of propylene units. In a preferred embodiment only propylene units in the polypropylene homopolymer are detectable. The comonomer content can be determined with FT infrared spectroscopy.

Component (A) can further be a heterophasic propylene copolymer (AA) comprising
- optionally a prepolymer fraction (A0)
- a propylene homopolymer (A1) as matrix phase and
- a propylene/alpha-olefin copolymer rubber (A2) dispersed in the matrix phase (A1).

If component (A0) is present in component (AA), preferably, the amount of component (A0) is up to 1.0 wt%, more preferably up to 0.5 wt% and most preferably up to 0.2 wt% based on component (AA).

Further, if component (A0) is present in component (AA), preferably, the amount of component (A0) is at least 0.0001 wt%, more preferably is at least 0.001 wt%, even more preferably is at least 0.005 wt%, and most preferably is at least 0.01 wt% based on component (AA).

Preferably, component (A1) has an MFR₂, measured according to ISO 1133 at 230°C and under a load of 2.16 kg, of at least 0.5 g/10 min, more preferably of at least 1.0 g/10 min and most preferably of at least 1.5 g/10 min.

Preferably, component (A1) has an MFR₂, measured according to ISO 1133 at 230°C and under a load of 2.16 kg, of not more than 30 g/10 min, more preferably of not more than 20 g/10 min and most preferably of not more than 15 g/10 min.

Preferably, component (A1) is present in an amount of at least 80.0 wt%, more preferably of at least 85.0 wt% and most preferably of at least 87.5 wt% based on component (AA).

Further preferably, component (A1) is present in an amount of not more than 97.5 wt%, more preferably of not more than 95.0 wt% and most preferably of not more than 92.5 wt% based on component (AA).

Preferably, component (A1) has an intrinsic viscosity (IV) of not more than 4.5 dl/g, more preferably of not more than 4.0 dl/g and most preferably of not more than 3.5 dl/g.

Further, preferably, component (A1) has an intrinsic viscosity (IV) of at least 1.5 dl/g, more preferably of at least 1.8 dl/g and most preferably of at least 2.0 dl/g.

Preferably, the comonomers used for the production of component (A2) may be selected from but are not limited to ethylene and/or C₄- to C₂₀-alpha-olefins. However, ethylene and/or C₄- to C₂₀-alpha-olefins are preferred, even more preferred are ethylene and/or C₄-to C₁₅-alpha-olefins, even more preferred are ethylene and/or C₄- to C₁₀-alpha-olefins, e.g. ethylene, 1-butene, 1-hexene, 1-octene, and most preferably the alpha-olefin is ethylene.

Preferably, component (A2) has a comonomer content of not more than 60 wt%, more preferably of not more than 50 wt% and most preferably of not more than 40 wt% based on component (A2).

Preferably, component (A2) has a comonomer content of at least 15 wt%, more preferably of at least 20 wt% based on component (A2).

Further, preferably, the amount of component (A2), determined as xylene cold solubles (XCS) of the component (AA), is not more than 20.0 wt%, more preferably not more than 15.0 wt% and most preferably not more than 12.5 wt% based on component (AA).

Preferably, the amount of component (A2), determined as xylene cold solubles (XCS) of the component (AA), is at least 2.5 wt%, more preferably is at least 5.0 wt% and most preferably is at least 7.5 wt% based on component (AA).

Further, preferably, the intrinsic viscosity (IV) of component (A2) is at least 0.8 dl/g, more preferably is at least 1.0 dl/g, and most preferably is at least 1.2 dl/g, component (A2) being measured as xylene cold soluble fraction as described above.

Further, preferably, the intrinsic viscosity (IV) of component (A2) is not more than 2.5 dl/g, more preferably is not more than 2.3 dl/g and most preferably is not more than 2.1 dl/g, component (A2) being measured as xylene soluble fraction as described above.

Further, preferably, the ratio IV(A2)/IV(A1) is not higher than 0.85 and more preferably not higher than 0.80.

Preferably, component (A2) is dispersed within the component (A1), or if component (A0) is present, in the mixture of components (A1) and (A0), preferably in the form of particles, more preferably said particles have a weight average particle size of less than 1.00 µm, more preferably less than 0.50 µm; further, preferably, said particles have a weight average particle size of at least 0.05 µm, more preferably of at least 0.10 µm.

A suitable method for determining this weight average particle size is described in the paper "Characterization of Modified Polypropylene by Scanning Electron Microscopy" by Pölt P, Ingolic E, Gahleitner M, Bernreitner K, Geymayer W, J. Appl. Polym. Sci. 78, (2000), 1152 ff.

For the purpose of the present invention "slurry reactor" designates any reactor, such as a continuous or simple batch stirred tank reactor or loop reactor, operating in bulk or slurry and in which the polymer forms in particulate form. "Bulk" means a polymerization in reaction medium that comprises at least 60 wt% of the monomer. Preferably the slurry reactor comprises (is) a bulk loop reactor. By "gas phase reactor" is meant any mechanically mixed or fluid bed reactor. Preferably the gas phase reactor comprises a mechanically agitated fluid bed reactor with gas velocities of at least 0.2 m/sec.

Thus, the polymerization reactor system used for the production of component (A) can comprise one or more conventional stirred tank slurry reactors or loop reactors, as described in WO 94/26794, and/or one or more gas phase reactors.

Preferably the reactors used for the production of component (A) are selected from the group of loop and gas phase reactors and, in particular, the process employs at least one loop reactor and at least one gas phase reactor. In case component (A) is a heterophasic propylene copolymer (AA), preferably component (A1) is produced in at least one loop reactor and component (A2) is produced in at least one gas phase reactor.

A suitable catalyst for the polymerization of component (A) is any stereospecific catalyst for propylene polymerization which is capable of polymerizing and copolymerizing propylene and comonomers at a temperature of 40 to 110°C and at a pressure from 10 to 100 bar. Ziegler Natta catalysts as well as metallocene catalysts are suitable catalysts.

For the preparation of component (A), the catalyst is preferably introduced into the first reactor only. The components of the catalyst can be fed into the reactor separately or simultaneously or the components of the catalyst system can be pre-contacted prior to the reactor.

A suitable propylene composition usable as component (A) and the process for its production is described in EP 1 661 935.

### Component B

Component (B) is a propylene homo- or random copolymer with a comonomer content of not more than 5 wt% and a branching index g' of less than 0.9.

Preferably, component (B) has an MFR₂ measured according to ISO 1133, at 230°C and under a load of 2.16 kg, of at least 0.1 g/10 min, more preferably of at least 0.2 g/10 min, even more preferably of at least 1.0 g/10 min, even more preferably of at least 2.0 g/10 min and most preferably of at least 2.5 g/10 min.

Further, preferably, component (B) has an MFR₂ measured according to ISO 1133, at 230°C and under a load of 2.16 kg, of not more than 100 g/10 min, even more preferably of not more than 50 g/10 min, more preferably of not more than 30 g/10 min, even more preferably of not more than 20 g/10 min and most preferably of not more than 10.0 g/10 min.

Preferably the cross-linked fraction of the polypropylene (B) does not exceed 1.0 wt%, even more preferred does not exceed 0.8 wt%, still more preferred does not exceed 0.5 wt% determined as the relative amount of polymer insoluble in boiling xylene (xylene hot insoluble fraction, XHI).

Preferably, component (B) has a density of at least 850 kg/m³, more preferably of at least 875 kg/m³ and most preferably of at least 900 kg/m³.

Further, preferably, component (B) has a density of not more than 950 kg/m³, more preferably of not more than 925 kg/m³ and most preferably of not more than 910 kg/m³.

Preferably, component (B) has a melting point of at least 140°C, more preferably of at least 150°C and most preferably of at least 160°C.

More preferably, component (B) has a pentad isotacticity as determined by ¹³C-NMR spectroscopy, of more than 90 mol%, more preferably of more than 92 mol%, even more preferably of more than 93 mol% and most preferably of more than 95 mol%.

Preferably, component (B) has a melt strength as determined in the Rheotens test of at least 5.0 cN at a maximum speed of at least 100 mm/s, more preferably of at least 10 cN at a maximum speed of at least 200 mm/s.

The measuring of the melt strength has been undertaken by a temperature of 200°C with an acceleration of the melt strand drawn down of 120 mm/s². The exact measuring method is defined in the example section.

The high melt strength is preferably achieved by a certain degree of branching of the propylene polymer.

A parameter of the degree of branching is the branching index g'. The branching index g' correlates with the amount of branches of a polymer. The branching index g' is defined as g'=[IV]_{br}/[IV]ₗᵢₙ in which g' is the branching index, [IV_{br}] is the intrinsic viscosity of the branched polypropylene and [IV]ₗᵢₙ is the intrinsic viscosity of the linear polypropylene having the same weight average molecular weight (within a range of ±10 %) as the branched polypropylene. Thereby, a low g'-value is an indicator for a high branched polymer. In other words, if the g'-value decreases, the branching of the polypropylene increases. Reference is made in this context to B.H. Zimm and W. H. Stockmeyer, J. Chem. Phys. 17,1301 (1949).

The intrinsic viscosity needed for determining the branching index g' is measured according to DIN ISO 1628/1, October 1999 (in Decalin at 135°C).

Thus, the branching index g' of the polypropylene (B) is less than 0.90, more preferably not more than 0.80, more preferably not more than 0.70.

Possible types of branching are
a) single branched polypropylenes ("Y propylenes") having a backbone with a single long side-chain and an architecture which resembles a "Y"
b) polypropylene types in which polymer chains are coupled with a bridging group (an architecture which resembles a "H")
c) multi-branched polypropylenes, i.e. not only the polypropylene backbone is furnished with a larger number of side chains (branched polypropylene) but also some of the side chains themselves. Such polypropylenes are characterized by rather high melt strength.

Polypropylenes of type a) and b) are for instance described in EP 0 787 750, polypropylenes of type c) are described in EP 1 903 070.

The homopolymer can be unimodal or multimodal. In case the homopolymer is multimodal, it is preferably bimodal.

In case component (B) is a random copolymer any comonomers used for the production of random copolymers known in the art may be used, however, ethylene and/or C₄- to C₂₀-alpha-olefins are preferred, even more preferred are ethylene and/or C₄- to C₁₅-alpha-olefins, even more preferred are ethylene and/or C₄- to C₁₀-alpha-olefins, even more preferred are ethylene and/or C₄- to C₆-alpha-olefins, and most preferred is 1-hexene.

Further, the random copolymer has a comonomer content of not more than 5.0 wt%, preferably of not more than 4.0 wt% and more preferably of not more than 3.0 wt%.

Preferably, the random copolymer has a comonomer content of at least 1.0 wt%, more preferably of at least 1.5 wt%.

The random copolymer can be unimodal or multimodal. In case the random copolymer is multimodal, it is preferably bimodal.

Preferably, component (B) is a propylene homopolymer.

Any process for the production of polypropylenes which is known in the art may be used for the production of component (B).

A polypropylene suitable as component (B) can be obtained as described in the following.

Accordingly the polypropylene (B) can be the result of treating an unmodified polypropylene (B') with thermally decomposing radical-forming agents and/or with ionizing radiation, where both treatments may optionally be accompanied or followed by a treatment with bi- or multifunctionally unsaturated monomers, e.g. butadiene, isoprene, dimethylbutadiene or divinylbenzene. A suitable method to obtain the polypropylene (B) is for instance disclosed in EP 0 879 830 A1 and EP 0 890 612 A2.

The unmodified polypropylene (B') has preferably an MFR₂ (230 °C) in a range of 0.05 to 45.00 g/10 min. More preferably the MFR₂ (230°C) is in a range of 0.05 to 35.00 g/10 min in case the unmodified polypropylene (B') is a homopolymer. On the other hand the MFR₂ (230°C) is in a range of 0.05 to 45.00 g/10 min in case the unmodified polypropylene (B') is a copolymer.

Preferably the unmodified polypropylene (B') has a comonomer content from 0.1 to 15.0 wt% of ethylene and or C₄- to C₁₈- alpha-olefins, in particular ethylene.

Moreover unmodified polypropylene (B') has preferably a rather broad molecular weight distribution (MWD), more preferably the unmodified polypropylene (B') is multimodal, even more preferably bimodal.

Moreover the unmodified polypropylene (B') has preferably a weight average molecular weight (M_{w}) of 500,000 to 1,500,000 g/mol, more preferably in the range of 600,000 to 1,000,000 g/mole. The number average molecular weight (Mₙ) preferably ranges of 25,000 to 100,000 g/mol and more preferably of 30,000 to 100,000 g/mol.

The peroxide used for the manufacture of polypropylene (B) is preferably a thermally decomposing free radical-forming agent, more preferably selected from the group consisting of acyl peroxide, alkyl peroxide, hydroperoxide, perester and peroxycarbonate.

The following listed peroxides are in particular preferred:
Acyl peroxides: benzoyl peroxide, 4-chlorobenzoyl peroxide, 3-methoxybenzoyl peroxide and/or methyl benzoyl peroxide.
Alkyl peroxides: allyl tert-butyl peroxide, 2,2-bis(tert-butylperoxybutane), 1,1-bis(tert-butylperoxy)-3,3,5-trimethylcyclohexane, n-butyl-4,4-bis(tert-butylperoxy) valerate, diisopropylaminomethyl-tert-amyl peroxide, dimethylaminomethyl-tert-amyl peroxide, diethylaminomethyl-tert-butyl peroxide, dimethylaminomethyl-tert-butyl peroxide, 1,1-di-(tert-amylperoxy)cyclohexane, tert-amyl peroxide, tert-butylcumyl peroxide, tert-butyl peroxide and/or 1-hydroxybutyl n-butyl peroxide.
Peresters and peroxy carbonates: butyl peracetate, cumyl peracetate, cumyl perpropionate, cyclohexyl peracetate, di-tert-butyl peradipate, di-tert-butyl perazelate, di-tert-butyl perglutarate, di-tert-butyl perthalate, di-tert-butyl persebacate, 4-nitrocumyl perpropionate, 1-phenylethyl perbenzoate, phenylethyl nitro-perbenzoate, *tert-*butylbicyclo-(2,2,1)heptane percarboxylate, *tert*-butyl-4-carbomethoxy perbutyrate, *tert-*butylcyclobutane percarboxylate, *tert*-butylcyclohexyl peroxycarboxylate, *tert-*butylcyclopentyl percarboxylate, *tert*-butylcyclopropane percarboxylate, *tert*-butyldimethyl percinnamate, *tert*-butyl-2-(2,2-diphenylvinyl) perbenzoate, *tert*-butyl-4-methoxy perbenzoate, *tert*-butylperbenzoate, *tert*-butylcarboxycyclohexane, *tert-*butyl pernaphthoate, *tert*-butyl peroxyisopropylcarbonate, *tert*-butyl pertoluate, *tert*-butyl-1-phenylcyclopropyl percarboxylate, *tert*-butyl-2-propylperpentene-2-oate, *tert-*butyl-1-methylcyclopropyl percarboxylate, *tert*-butyl-4-nitrophenyl peracetate, tert-butylnitrophenyl peroxycarbamate, *tert*-butyl-N-succiimido percarboxylate, *tert*-butyl percrotonate, *tert-*butyl permaleic acid, *tert*-butyl permethacrylate, *tert*-butyl peroctoate, *tert*-butyl peroxyisopropylcarbonate, *tert*-butyl perisobutyrate, *tert*-butyl peracrylate and/or *tert*-butyl perpropionate;
or mixtures of these above listed free radical-forming agents.

If present in the process for the manufacture of the polypropylene (B), the (volatile) bifunctional monomers are preferably ethylenically unsaturated, multifunctional monomers, like C₄- to C₁₀- dienes and/or C₇- to C₁₀- divinyl compounds. Especially preferred bifunctional monomers are butadiene, isoprene, dimethylbutadiene and divinylbenzene.

The polypropylene (B) is preferably obtained by a process as described in EP 0 879 830 A1 and EP 0 890 612 A2. Accordingly the polypropylene is produced by
(a) mixing
   (i) a unmodified propylene homopolymer and/or copolymer (B') as defined above,
   (ii) from 0.05 to 3 wt.-% based on the components of (i) and (ii), of free radical-forming agents as defined above, and
   (iii) optionally diluted with inert solvents,
(b) heating to 30-100°C, preferably to 60-90°C,
(c) sorption during a sorption time τ of volatile bifunctional monomers, preferably ethylenically unsaturated, multifunctional monomers, like C₄- to C₁₀- dienes and/or C₇- to C₁₀- divinyl compounds, by the unmodified propylene homopolymer and/or copolymer (B'), preferably unmodified propylene homopolymer (B'), from the gas phase at a temperature of from 20 to 120 °C, preferably of from 60 to 100 °C, where the amount of the absorbed bifunctionally unsaturated monomers is from 0.01 to 10.00 wt.-%, preferably from 0.05 to 2.00 wt.-%, based on the unmodified propylene homopolymer and/or copolymer (B'),
(d) heating and melting the polypropylene composition in an atmosphere comprising inert gas and/or the volatile bifunctional monomers, from sorption temperature to 210°C, whereupon the free-radical generators are decomposed and then
(e) heating the melt up to 280°C in order to remove unreacted monomers and decomposition products, and
(f) agglomerating the melt.

Usual amounts of auxiliary substances, which may range from 0.01 to 2.5 wt% of stabilizers, 0.01 to 1 wt% of processing aids, 0.1 to 1 wt% of antistats, 0.2 to 3 wt% of pigments and up to 3 wt% of α-nucleating agents, in each case based on the sum of the propylene polymers, may be added before step a) and/or f) of the method and/or before or during step d) and/or e) of the above described method.

The process for producing the modified propylene polymer preferably is a continuous method, performed in continuous reactors, mixers, kneaders and extruders. Batchwise production of the modified propylene polymer however is feasible as well.

Preferably, the sorption time τ is from 10 to 1000 s, more preferably τ is from 60 to 600.

Polypropylene (B) can also be produced in the presence of a metallocene catalyst, as, for example, described in EP 1 892 264 using a catalyst system comprising an asymmetric catalyst, whereby the catalyst system has a porosity of less than 1.40 ml/g, more preferably less than 1.30 ml/g and most preferably less than 1.00 ml/g. The porosity has been measured according to DIN 66135 (N₂). In another preferred embodiment the porosity is not detectable when determined with the method applied according to DIN 66135 (N2₎.

An asymmetric catalyst is a metallocene compound comprising at least two organic ligands which differ in their chemical structure. More preferably the asymmetric catalyst is a metallocene compound comprising at least two organic ligands which differ in their chemical structure and the metallocene compound is free of C₂-symmetry and/or any higher symmetry. Preferably the asymmetric metallocene compound comprises only two different organic ligands, still more preferably comprises only two organic ligands which are different and linked via a bridge.

Said asymmetric catalyst is preferably a single site catalyst (SSC).

Furthermore it is preferred, that the catalyst system has a surface area of less than 25 m²/g, yet more preferred less than 20 m²/g, still more preferred less than 15 m²/g, yet still less than 10 m²/g and most preferred less than 5 m²/g. The surface area according to this invention is measured according to ISO 9277 (N₂).

It is in particular preferred that the catalytic system comprises an asymmetric catalyst, i.e. a catalyst as defined below, and has porosity not detectable when applying the method according to DIN 66135 (_{N}2) and has a surface area measured according to ISO 9277 (N₂) less than 5 m²/g.

Preferably the asymmetric catalyst compound, i.e. the asymmetric metallocene, has the formula (I):

(Cp)₂R_{Z}MX₂ (1)

wherein
zis0or1,
M is Zr, Hf or Ti, more preferably Zr, and
X is independently a monovalent anionic ligand, such as σ-ligand
R is a bridging group linking the two Cp ligands,
Cp is an organic ligand selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl,
   with the proviso that both Cp-ligands are selected from the above stated group and both Cp-ligands have a different chemical structure.
The term "a-ligand" is understood in the whole description in a known manner, i.e. a group bonded to the metal at one or more places via a sigma bond. Preferred monovalent anionic ligands are halogens, in particular chlorine (CI).

Preferably, the asymmetric catalyst is of formula (I) indicated above, wherein M is Zr and each X is Cl.

Preferably both Cp-ligands are selected from one of the groups of substituted cyclopentadienyl, substituted indenyl, substituted tetrahydroindenyl, and substituted fluorenyl and wherein the Cp-ligands differ in the substituents bonded to the rings to obtain an asymmetric structure.
The optional one or more substituent(s) bonded to cyclopentadienyl, indenyl, tetrahydroindenyl, or fluorenyl may be independently selected from a group including halogen, hydrocarbyl (e.g. C₁- to C₂₀-alkyl, C₂- to C₂₀-alkenyl, C₂- to C₂₀-alkynyl, C₃- to C₁₂-cycloalkyl, C₆- to C₂₀-aryl or C₇- to C₂₀-arylalkyl), C₃- to C₁₂-cydoalkyl which contains 1, 2, 3 or 4 heteroatom(s) in the ring moiety, C₆- to C₂₀-heteroaryl, C₁- to C₂₀-haloalkyl, - SiR"₃, -OSiR"₃, -SR", -PR"₂ and -NR"₂, wherein each R" is independently a hydrogen or hydrocarbyl, e.g. C₁- to C₂₀-alkyl, C₂- to C₂₀-alkenyl, C₂- to C₂₀-alkynyl, C₃- to C₁₂-cycloalkyl or C₆- to C₂₀-aryl.

More preferably both Cp-ligands are indenyl moieties wherein each indenyl moiety bear one or two substituents as defined above. More preferably each Cp-ligand is an indenyl moiety bearing two substituents as defined above, with the proviso that the substituents are chosen in such are manner that both Cp-ligands are of different chemical structure, i.e. both Cp-ligands differ at least in one substituent bonded to the indenyl moiety, in particular differ in the substituent bonded to the five member ring of the indenyl moiety.

Still more preferably both Cp are indenyl moieties wherein the indenyl moieties comprise at least at the five membered ring of the indenyl moiety, more preferably at 2-position, a substituent selected from the group consisting of alkyl, such as C₁- to C₆ alkyl, e.g. methyl, ethyl, isopropyl, and trialkyloxysiloxy, wherein each alkyl is independently selected from C₁- to C₆ alkyl, such as methyl or ethyl, with proviso that the indenyl moieties of both Cp chemically differ from each other, i.e. the indenyl moieties of both Cp comprise different substituents.

Still more preferred both Cp are indenyl moieties wherein the indenyl moieties comprise at least at the six membered ring of the indenyl moiety, more preferably at 4-position, a substituent selected from the group consisting of a C₆- to C₂₀ aromatic ring moiety, such as phenyl or naphthyl, preferably phenyl, which is optionally substituted with one or more substituents, such as C₁- to C₆ alkyl, and a heteroaromatic ring moiety, with proviso that the indenyl moieties of both Cp chemically differ from each other, i.e. the indenyl moieties of both Cp comprise different substituents.

Yet more preferably both Cp are indenyl moieties wherein the indenyl moieties comprise at the five membered ring of the indenyl moiety, more preferably at 2-position, a substituent and at the six membered ring of the indenyl moiety, more preferably at 4-position, a further substituent, wherein the substituent of the five membered ring is selected from the group consisting of alkyl, such as C₁- to C₆ alkyl, e.g. methyl, ethyl, isopropyl, and trialkyloxysiloxy, wherein each alkyl is independently selected from C₁- to C₆ alkyl, such as methyl or ethyl, and the further substituent of the six membered ring is selected from the group consisting of a C₆- to C₂₀ aromatic ring moiety, such as phenyl or naphthyl, preferably phenyl, which is optionally substituted with one or more substituents, such as C₁- to C₆ alkyl, and a heteroaromatic ring moiety, with proviso that the indenyl moieties of both Cp chemically differ from each other, i.e. the indenyl moieties of both Cp comprise different substituents. It is in particular preferred that both Cp are idenyl rings comprising two substituents each and differ in the substituents bonded to the five membered ring of the indenyl rings.

Concerning the moiety "R" it is preferred that "R" has the formula (II)

-Y(R')₂- (II)

wherein
Y is C, Si or Ge, and
R' is C₁- to C₂₀- alkyl, C₆- to C₁₂- aryl, or C₇- to C₁₂- arylalkyl or trimethylsilyl.
In case both Cp-ligands of the asymmetric catalyst as defined above, in particular case of two indenyl moieties, are linked with a bridge member R, the bridge member R is typically placed at 1-position. The bridge member R may contain one or more bridge atoms selected from e.g. C, Si and/or Ge, preferably from C and/or Si. One preferable bridge R is -Si(R')₂-, wherein R' is selected independently from one or more of e.g. trimethylsilyl, C₁- to C₁₀- alkyl, C₁- to C₂₀- alkyl, such as C₆- to C₁₂- aryl, or C₇- to C₄₀-, such as C₇- to C₁₂- arylalkyl, wherein alkyl as such or as part of arylalkyl is preferably C₁- to C₆- alkyl, such as ethyl or methyl, preferably methyl, and aryl is preferably phenyl. The bridge - Si(R')₂- is preferably e.g. -Si(C₁- to C₆- alkyl)₂-, -Si(phenyl)₂- or -Si(C₁- to C₆-alkyl)(phenyl)-, such as -Si(Me)₂-.

More preferably, the asymmetric catalyst, i.e. the asymmetric metallocene, is defined by the formula (III)

(Cp)₂R₁ZrCl₂ (III)

wherein
both Cp coordinate to M and are selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl,
with the proviso that both Cp-ligands are of different chemical structure, and R is a bridging group linking two ligands L,
wherein R is defined by the formula (II)

― Y(R')₂― (II)

wherein
Y is C, Si or Ge, and
R' is C₁- to C₂₀- alkyl, C₆- to C₁₂- aryl, or C₇- to C₁₂- arylalkyl.

More preferably the asymmetric catalyst is defined by the formula (111), wherein both Cp are selected from the group consisting of substituted cyclopentadienyl, substituted indenyl, substituted tetrahydroindenyl, and substituted fluorenyl.

Yet more preferably the asymmetric catalyst is defined by the formula (111), wherein both Cp are selected from the group consisting of substituted cyclopentadienyl, substituted indenyl, substituted tetrahydroindenyl, and substituted fluorenyl,
with the proviso that both Cp-ligands differ in the substituents, i.e. the substituents as defined above, bonded to cyclopentadienyl, indenyl, tetrahydroindenyl, or fluorenyl.
Still more preferably the asymmetric catalyst is defined by the formula (III), wherein both Cp are indenyl and both indenyl differ in one substituent, i.e. in a substituent as defined above bonded to the five member ring of indenyl.

It is in particular preferred that the asymmetric catalyst is a non-silica supported catalyst as defined above, in particular a metallocene catalyst as defined above.

Preferably, the asymmetric catalyst is dimethylsilyl [(2-methyl-(4'-*tert*-butyl)-4-phenyl-indenyl)(2-isopropyl-(4'-*tert*-butyl)-4-phenyl-indenyl)]zirconium dichloride (IUPAC: dimethylsilandiyl [(2-methyl-(4'-*tert-*butyl)-4-phenyl-indenyl)(2-isopropyl-(4'-*tert*-butyl)-4-phenyl-indenyl)]zirconium dichloride). More preferred said asymmetric catalyst is not silica supported.

The above described asymmetric catalyst components are prepared according to the methods described in WO 01/48034.

It is in particular preferred that the asymmetric catalyst system is obtained by the emulsion solidification technology as described in WO 03/051934. Hence the asymmetric catalyst is preferably in the form of solid catalyst particles, obtainable by a process comprising the steps of
a) preparing a solution of one or more asymmetric catalyst components;
b) dispersing said solution in a solvent immiscible therewith to form an emulsion in which said one or more catalyst components are present in the droplets of the dispersed phase,
c) solidifying said dispersed phase to convert said droplets to solid particles and optionally recovering said particles to obtain said catalyst.

Preferably a solvent, more preferably an organic solvent, is used to form said solution. Still more preferably the organic solvent is selected from the group consisting of a linear alkane, cyclic alkane, linear alkene, cyclic alkene, aromatic hydrocarbon and halogen-containing hydrocarbon.

Moreover the immiscible solvent forming the continuous phase is an inert solvent, more preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably C₃- to C₃₀- perfluoroalkanes, C₃- to C₃₀ alkenes or C₃- to C₃₀- cycloalkanes, more preferred C₄- to C₁₀- perfluoro-alkanes, C₄- to C₁₀- alkenes or C₄- to C₁₀- cycloalkanes, particularly preferred perfluorohexane, perfluoroheptane, perfluorooctane or perfluoro (methylcyclohexane) or a mixture thereof.

Furthermore it is preferred that the emulsion comprising said continuous phase and said dispersed phase is a bi- or multiphasic system as known in the art. An emulsifier may be used for forming the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (B) heteroatom(s), preferably halogenated hydrocarbons optionally having a functional group, preferably semi-, highly-or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated C₁ to C₃₀ alcohol, which reacts e.g. with a cocatalyst component, such as aluminoxane.

In principle any solidification method can be used for forming the solid particles from the dispersed droplets. Preferably the solidification is effected by a temperature change treatment. Hence the emulsion subjected to gradual temperature change of up to 10°C/min, preferably 0.5 to 6°C/min and more preferably 1 to 5°C/min. Even more preferred the emulsion is subjected to a temperature change of more than 40°C, preferably more than 50°C within less than 10 seconds, preferably less than 6 seconds.

The recovered particles preferably have an average size range of 5 to 200 µm, more preferably 10 to 100 µm.

Moreover, the form of solidified particles have preferably a spherical shape, a predetermined particles size distribution and a surface area as mentioned above of preferably of less than 25 m²/g, still more preferably of less than 20 m²/g, yet more preferably of less than 15 m²/g, yet still more preferably of less than 10 m²/g and most preferably of less than 5 m²/g, wherein said particles are obtained by the process as described above.

For further details and examples of the continuous and dispersed phase system, emulsion formation method, emulsifying agent and solidification methods reference is made e.g. to the above cited international patent application WO 03/051934.

As mentioned above the catalyst system may further comprise an activator as a cocatalyst, as described in WO 03/051934.

Preferred, as cocatalysts for metallocenes and non-metallocenes, are aluminoxanes, in particular the C₁- to C₁₀-alkylaluminoxanes, most particularly methylaluminoxane (MAO). Such aluminoxanes can be used as the sole cocatalyst or together with other cocatalyst(s). Thus besides or in addition to aluminoxanes, other cation complex forming catalysts activators can be used. Said activators are commercially available or can be prepared according to the prior art literature.

Further, suitable aluminoxane cocatalysts are described *inter alia* in WO 94/28034. These are linear or cyclic oligomers of having up to 40, preferably 3 to 20, -(AI(R"')O)- repeat units (wherein R"' is hydrogen, C₁- to C₁₀-alkyl (preferably methyl) or C₆- to C₁₈-aryl or mixtures thereof).

The use and amounts of such activators are within the skills of an expert in the field. As an example, with the boron activators, 5:1 to 1:5, preferably 2:1 to 1:2, such as 1:1, ratio of the transition metal to boron activator may be used. In case of the preferred aluminoxanes, such as methylaluminumoxane (MAO), the amount of Al, provided by aluminoxane, can be chosen to provide a molar ratio of Al:transition metal e.g. in the range of 1 to 10 000, suitably 5 to 8000, preferably 10 to 7000, e.g. 100 to 4000, such as 1000 to 3000. In case of solid (heterogeneous) catalyst the ratio is preferably below 500.

The quantity of cocatalyst to be employed in the catalyst of the invention is thus variable, and depends on the conditions and the particular transition metal compound chosen in a manner well known to a person skilled in the art.

Any additional components to be contained in the solution comprising the organotransition compound may be added to said solution before or, alternatively, after the dispersing step.

The process for producing polypropylene (B) using the above defined metallocene catalyst is preferably a multi-stage process.

Multistage processes include also bulk/gas phase reactors known as multizone gas phase reactors for producing multimodal propylene polymer.

A preferred multistage process is a "loop-gas phase"-process, such as developed by Borealis A/S, Denmark (known as BORSTAR® technology) described e.g. in patent literature, such as in EP 0 887 379 or in WO 92/12182.

Multimodal polymers can be produced according to several processes which are described, e.g. in WO 92/12182, EP 0 887 379 and WO 97/22633.

A multimodal polypropylene (B) is produced preferably in a multi-stage process in a multi-stage reaction sequence as described in WO 92/12182.

A suitable polymer usable as component (B) and a process for its preparation is described in EP 1 892 264.

### Component C

Another essential requirement of the present invention is that the polypropylene composition comprises at least one α-nucleating agent (C).

In principle any α-nucleating agent (C) can be used. Examples of suitable α-nucleating agents are selected from the group consisting of
(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and C₁₈-C-alkyl-substituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), nonitol,1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer.

Such additives are generally commercially available and are described, for example, in Gachter/Muller, Plastics Additives Handbook, 4th Edition, Hansa Publishers, Munich, 1993.

The nucleating agent content of the polypropylene composition is preferably from 0.001 up to 1 wt%, preferably from 0.02 to 0.50 wt%, of a α-nucleating, in particular sodium benzoate, 1,3:2,4-bis-(3,4-dimethyl-benzylidene)-sorbitol, sodium-2,2'-methylenebis-(4,6-di-tert-butyl-phenyl)-phosphate, hydroxybis-(2,4,8,10-tetra-tert-butyl-6-hydroxy-12h-dibenzo-(d,g)(1,3,2)-dioxaphosphocin-oxidato)-aluminium, ADK STAB NA-21 (Adeka Palmarole, France), Hyperform HPN-20 E (Milliken, USA) or mixtures thereof.

In case the α-nucleating agents are polymeric α-nucleating agents selected from the group consisting of vinylcycloalkane polymers and vinylalkane polymers, these polymeric nucleating agents are either accomplished by a special reactor technique, where the catalyst is prepolymerized with monomers like e.g. vinylcyclohexane (VCH), or by blending the polypropylene composition with the vinylcycloalkane polymer or vinylalkane polymer.

In a preferred embodiment preferably the component (A) is alpha-nucleated with a nucleating agent. Such an alpha-nucleation can be carried out by using any suitable alpha-nucleating agent or alpha-nucleating method known in the art and as described above.

The preferred alpha-nucleation method, is the special reactor technique, where the catalyst is prepolymerized with at least one vinyl compound, said method is herein later referred to as "BNT". This method is described in detail in EP 1 028 984 and EP 1 183 307. For the purpose of this invention "BNT" is referred to as alpha-nucleating agent.

Preferred vinyl compounds to be used in the Borstar Nucleation Technology (BNT)-method are represented by the following formula 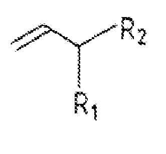 wherein R¹ and R² are independently selected from C₁-C₄-alkyl groups or they form together a saturated, an unsaturated or an aromatic five- or six-membered ring, whereby this ring may be substituted and/or bridged with one or more C₁- or C₂-alkyl groups.

More preferably the vinyl compound is selected from vinyl cycloalkanes, e.g. vinyl cyclopentane, vinyl cyclohexane, vinyl-2-methyl-cyclohexane and vinyl norbonane, 3-methyl-1-butene, styrene, p-methyl-styrene, 3-ethyl-1-hexene or mixtures thereof, particularly preferred is vinyl cyclohexane (VCH).

Preferably, the catalyst is prepolymerized in the BNT method at a temperature significantly below the polymerization temperature.

In case the catalyst is prepolymerized with the BNT method as described above, said prepolymer fraction is preferably present in an amount of up to 1.0 wt. %, more preferably up to 0.5 wt. % and most preferably up to 0.2 wt. % based on component (A).

In case the catalyst is prepolymerized with the BNT method as described above, said prepolymer fraction is preferably present in an amount of at least 0.0001 wt. %, more preferably of at least 0.001 wt. %, even more preferably of at least 0.005 wt. %, and most preferably of at least 0.01 wt.% based on component (A).

For component (A) being a heterophasic copolymer, preferably, component (A0) as described above, if present, has been prepolymerized with the BNT-method as described above.

### Polymer Composition

To obtain especially good results the required components as defined above may be present in specific amounts within the new polypropylene composition. Thus it is preferred that the polypropylene composition according to the instant invention comprises
a. 15 to 85 wt% of the highly crystalline polypropylene (A), preferably 20 to 80 wt% of the highly crystalline polypropylene (A),
b. 85 to 15 wt% of the high melt strength polypropylene (B), preferably 80 to 20 wt% of the high melt strength polypropylene (B) and
c. 0.001 to 1.0 wt% of the alpha nucleating agent (C), preferably 0.02 to 0.50 wt.-% of the alpha nucleating agent (C),
based on the total polypropylene composition.

Preferably, the polypropylene composition has an MFR₂ measured according to ISO 1133, at 230°C and under a load of 2.16 kg, of at least 0.5 g/10 min, more preferably of at least 1.0 g/10 min and most preferably of at least 1.5 g/10 min.

Further, preferably, the polypropylene composition has an MFR₂ measured according to ISO 1133, at 230°C and under a load of 2.16 kg, of not more than 50 g/10 min, more preferably of not more than 30 g/10 min and most preferably of not more than 20 g/10 min.

Preferably, the polypropylene composition has a melting point of at least 150°C, more preferably of at least 155°C and most preferably of at least 160°C.

Further, preferably, the polypropylene composition has a content of xylene cold solubles (XCS) of not more than 20 wt%, preferably of not more than 17 wt%.

Moreover, the polypropylene composition of the invention may further contain various additives, such as miscible thermoplastics, antioxidants, UV-stabilizers, lubricants, fillers, colouring agents, processing aids and foaming agents which can be added to the composition before, during or after the blending or later during the production of finished or semi-finished articles, e.g. films in an amount of up to 2.0 wt%, preferably up to 1.0 wt% based on the total polymer composition.

The invention is furthermore directed to a process for producing the polypropylene composition according to the invention.

The inventive polypropylene composition can be produced by any suitable melt mixing process at temperatures above the melting point of the respective polypropylene composition. Typical devices for performing said melt mixing process are twin screw extruders, single screw extruders optionally combined with static mixers, chamber kneaders like Farell kneaders and reciprocating co-kneaders like Buss co-kneaders. Preferably, the melt mixing process is carried out in a twin screw extruder with high intensity mixing segments and preferably at a temperature of 170 to 270 °C, more preferably of 180 to 250 °C.

The inventive polypropylene composition may also be compounded just prior being further processed into the desired article, i.e. the polymer is directly fed from the melt mixing process in molten state to the next processing step, e.g. a film blowing machine. Said melt mixing process can be carried out as described above, preferably in a single screw extruder, optionally comprising a static mixer, is used, preferably at a temperature from 170 to 270°C, more preferably from 180 to 250°C.

### Production of films

The polypropylene composition according to the invention is suitable for the production of blown films as well as cast films.

Thus the invention is furthermore directed to a blown film or cast film comprising the polypropylene composition according to the invention.

### Description of film production by blown film technology

The polymer compositions of the invention are capable of being manufactured into water or air quench blown films, preferably air quenched blown films, on typical polyethylene blown film production equipment.
In principle the process comprising the steps of
(i) blowing up a tube of molten material with air perpendicularly to the upwards direction from a side-fed blown film die;
(ii) cooling it down with water contact cooling ring or air quench;
(iii) folding it and guiding it over deflector rolls onto the winder wherein the material is a composition comprising

### Blown film technology with water contact cooling ring

In this technology for producing polymer films, the molten polymer is extruded through a tubular die fed by a (usually single-screw) extruder and blown up to a tube. The film tube has contact on the exterior side to a water cooling ring and is cooled down quickly. The already solidified film tube is flattened afterwards by take-up rolls and taken off to a winder.

For a more detailed description see "Polypropylene Handbook", edited by Edward P. Moore, Jr., Hanser Publishers, 1996.

### Blown film technology with air quench

In this manufacturing step for air quenched blown films the film is made using at least a 1.5 blow up ratio, preferably at least a 2.0 blow up ratio, more preferably at least a 2.5 blow up ratio.

The technique of air quenched blown film extrusion is well known for the production of thin plastic films. In an advantageous process, plastics, such as low, linear low and high density polyethylene are extruded through a circular die to form a film. Air is introduced through the center of the die to maintain the film in the form of a bubble which increases the diameter of the film about 1.5 to 6 fold, after which the bubble is collapsed onto rolers. There are a number of variations of such a process within the skill in the art. Most references to blowing polyolefin films disclose processes used for polyethylene, but these are applicable to the polymer compositions of the invention within few modifications within the skill in the art without undue experimentation.

For instance cooling is often advantageously modified because the art recognizes that polypropylene cools and crystallizes at a rate different from that of polyethylene. Therefore, adjustments to the cooling parameters often produce a more stable bubble at desired output rates.

In the formation of blown films, the melted polymer composition (melt) enters a ringshaped die either through the bottom or side thereof. The melt is forced through spiral grooves around the surface of a mandrel inside the die and extruded through the die opening as a thick-walled tube. The tube is expanded into a bubble of desired diameter and correspondingly decreased thickness as previously described.

### Description of film production by cast film technology

In this most simple technology for producing polymer films, the molten polymer is extruded through a slot die fed by a (normally single-screw) extruder onto a first cooled roll, the so-called chill-roll. From this roll, the already solidified film is taken up by a second roll (nip roll or take-up roll) and transported to a winding device after trimming the edges. Only a very limited amount of orientation is created in the film, which is determined by the ratio between die thickness and film thickness or the extrusion speed and the take-up speed, respectively. Due to its technical simplicity, cast film technology is a very economical and easy-to-handle process. The films resulting from this technology are characterised by good transparency and rather isotropic mechanical properties (limited stiffness, high toughness).

Summing up the process comprises the steps of
i) pouring or spreading a solution, hot-melt or dispersion of a material onto a temporary carrier
ii) hardening the material, and
iii) stripping the hardened film from the surface of the carrier.

The possible processes used for the production of this film are illustrated in Figure 1: 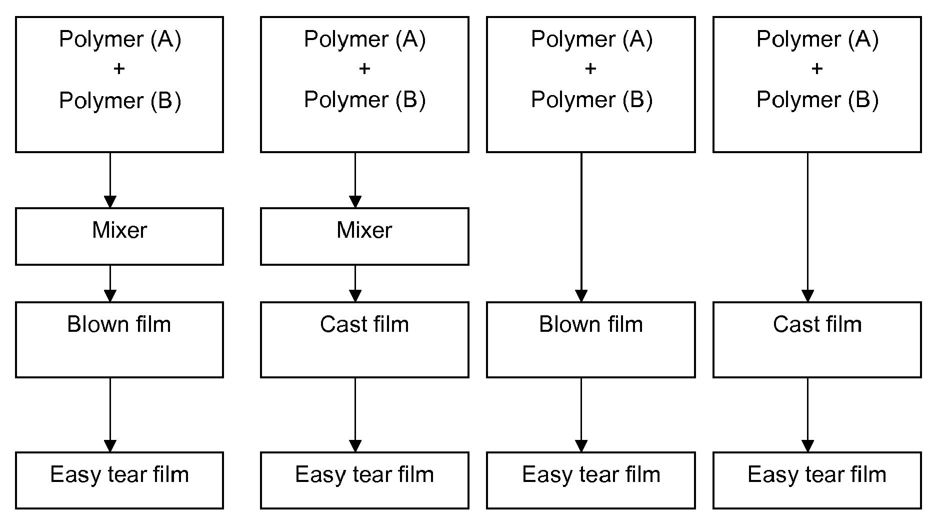 Films having a thickness of 5 to 300 µm, preferably 10 to 200 µm, more preferably 20 to 150 µm are suitable according to the present invention.

Further, preferably, the inventive films have a haze of not more than 40 %, more preferably of not more than 35 % and most preferably of not more than 30 % for a film thickness of 30 µm according to ASTM D1003-00.

The transparency of the inventive films is at least 80%, preferably at least 90 % and most preferably at least 94 % for a thickness of 30 µm according to ASTM D1003-00.

On the inventive films, tensile tests were carried out in machine direction (MD) and transversal direction (TD) according to ISO 527-3 on film samples having a width of 25 mm and a thickness of 20 to 29 µm. The test temperature was 23°C. These abbreviations are used in the following.

The tensile modulus (MD) of the inventive films is at least 1400 MPa, preferably is at least 1500 MPa, more preferably is at least 1600 MPa and most preferably at least 1900 MPa.

Further, the tensile stress at yield (MD) of the inventive films is at least 25.0 MPa, preferably is at least 30.0 MPa and more preferably is at least 35.0 MPa.

Further, preferably, the tensile strain at break (MD) of the inventive films is not more than 700 %, more preferably is not more than 350 %.

The tensile modulus (TD) of the inventive films is at least 1300 MPa, preferably is at least 1400 MPa and more preferably at least 1600 MPa.

Further, the tensile stress at yield (TD) of the inventive films is at least 29.0 MPa, and preferably is at least 33.0 MPa.

Further, preferably, the tensile strain at break (TD) of the inventive films is not more than 150 %, more preferably is not more than 50 %.

The tear resistance was determined according to the Elmendorf method, according to ISO 6383-2, but without a notch to be able to check the initial force necessary to rip the film.

The inventive films have a tear resistance (MD) of not more than 0.55 N, preferably not more than 0.35 N and a tear resistance (TD) of not more than 0.70 N, preferably not more than 0.30 N and more preferably not more than 0.25 N.

Further the inventive films have a relative tear resistance (MD) of not more than 21 N/mm, preferably not more than 15 N/mm and a relative tear resistance (TD) of not more than 27 N/mm and preferably not more than 10 N/mm.

It has been found that such a blown or cast film show low rip and tear resistance in MD as well as in TD combine with a low elasticity. Additionally this film has a high transparency and a good heat resistance.

Possible articles for which the inventive blown film and cast film can be used are lamination or mono- or multilayer films, general packaging films, like bread bags, pouches and medical/hygienic films, wherein the film according to the invention comprises at least one layer.

The invention is furthermore directed to the use of the films according to the invention for the production of a laminated or unlaminated film construction, preferably for the production of packaging for food and medicals.

A preferred laminated film construction comprises one layer consisting of the inventive film as described above and at least one aluminium layer.

In the following, the invention is illustrated by non-limiting examples.

### Examples

### 1. Definitions/Measuring Methods

The following definitions of terms and determination methods apply for the above general description of the invention as well as to the below examples unless otherwise defined.

The **melt flow rates** were measured with a load of 2.16 kg and at 230°C. The melt flow rate (MFR) is that quantity of polymer in grams which the test apparatus standardized to ISO 1133 extrudes within 10 minutes at a temperature of 230°C under a weight of 2.16 kg.

**Density** is measured according to ISO 1183-187. Sample preparation is done by compression moulding in accordance with ISO 1872-2:2007

### Branching index g'

The branching index g' defines the degree of branching and correlates with the amount of branches of a polymer. The branching index g' is defined as g'=[IV]_{br}/[IV]ₗᵢₙ, in which g' is the branching index, [IV_{br}] is the intrinsic viscosity of the branched polypropylene and [IV]ₗᵢₙ is the intrinsic viscosity of the linear polypropylene having the same weight average molecular weight (within a range of ±10 %) as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949).
The intrinsic viscosity needed for determining the branching index g' is measured according to DIN ISO 1628/1, October 1999 (in Decalin at 135 °C).

### Isotacticity

The isotactic pentad content in mol% was determined by quantitative nuclear magnetic resonance (¹³C-NMR) spectroscopy after basic assignment (e.g. "NMR Spectra of Polymers and Polymer Additives", A. J. Brandolini and D. D. Hills, 2000, Marcel Dekker, Inc. New York). Experimental parameters were adjusted to ensure measurement of quantitative spectra for this specific task (e.g. "200 and More NMR Experiments: A Practical Course", S. Berger and S. Braun, 2004, Wiley-VCH, Weinheim). Quantities were calculated using simple corrected ratios of the signal integrals of representative sites in a manner known in the art.

### Xylene solubles (XCS, wt%)

Content of xylene cold solubles (XCS) is determined at 23 °C according ISO 6427.

### Melting temperature Tm and Crystallinity

The melting temperature Tm, crystallisation temperature Tc and degree of crystallinity are measured with a Mettler TA820 differential scanning calorimetry device (DSC) on 3 ± 0.5 mg samples. Crystallisation and melting temperatures are obtained during 10 °C/min cooling and heating scans between 30 °C and 225 °C. Melting and crystallisation temperatures were taken as the peaks of the endotherms and exotherms. The degree of crystallinity is calculated by comparison with the heat or fusion of a perfectly crystalline polypropylene, i.e. 209 J/g.)

### Comonomer content

This has been measured with Fourier transform infrared spectroscopy (FTIR) calibrated with ¹³C-NMR. When measuring the ethylene content in polypropylene, a thin film of the sample (thickness about 250 mm) was prepared by hot-pressing. The area of ―CH₂― absorption peak (800-650 cm⁻¹) was measured with Perkin Elmer FTIR 1600 spectrometer. The method was calibrated by ethylene content data measured by ¹³C-NMR.
Film thickness was 50pm and the film was produced as follows.

The pelletized materials have been used for film blowing at a commercial blown-film line Alpine 35, using a screw with compression and metering zone with temperature settings 180/200/220/220/220°C and a initial screw speed as given in the table below. The bubble has been stretched with a blow up ratio of 2 and winded up with 10.4 m/min. Already during film making it showed that the films from IE1 and IE2 behave significantly different to the known polymers. The film is much easier to process. The blown film had a thickness of 50 µm. The melt temperature was 221 °C.

### Strain hardening behaviour (melt strength):

The strain hardening behaviour is determined by the method as described in the article "Rheotens-Mastercurves and Drawability of Polymer Melts", M. H. Wagner, Polymer Engineering and Sience, MID-APRIL ISW, Vol. 36, NO. 7, pages 925 to 935. The content of the document is included by reference.
The strain hardening behaviour of polymers is analysed by Rheotens apparatus (product of G6ttfert, Siemensstr.2, 74711 Buchen, Germany) in which a melt strand is elongated by drawing down with a defined acceleration. The haul-off force F in dependence of drawdown velocity v is recorded.
The test procedure is performed in a standard climatized room with controlled room temperature of 23 °C and 30 bar. The Rheotens apparatus is combined with an extruder/melt pump for continuous feeding of the melt strand. The extrusion temperature is 200 °C; a capillary die with a diameter of 2 mm and a length of 6 mm is used. The strength length between the capillary die and the Rheotens wheels is 80 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions. The acceleration of the melt strand drawn down is 120 mm/sec².
The Rheotens was operated in combination with the PC program EXTENS. This is a real-time data-acquisition program, which displays and stores the measured data of tensile force and drawdown speed.

**Gloss, transparency** and **haze** as measures for the optical appearance of the films were determined according to DIN 67 530 (gloss) and ASTM D 1003-00 (transparency and haze), both on blown and cast film samples with a thickness of 30 µm.

### Tear Resistance (Elmendorf)

Tear resistance was determined at room temperature on 75*63 mm² films having a thickness of 20 to 29 µm according to a modified ISO 6383-2 (Elmendorf test), without the precut slit of 20 mm parallel to the 63mm-side.
For the modified Elmendorf test the tear (or better) rip resistance was measured without a notch to be able to check the initial force necessary to rip the film.
The force required to tear the specimen completely along its width was used to calculate the tear resistance.

### Tensile tests in TD (transversal direction) and MD (machine direction)

Tensile tests were carried out in machine direction (MD) and transversal direction (TD) according to ISO 527-3 on film samples having a width of 25 mm, a length of 200 mm and a thickness of 20 to 29 µm. The test temperature was 23°C.

### 2. Materials

As highly crystalline polypropylene (A) the following polymers were used:
(A-1) heterophasic propylene copolymer, Borpact™ BC918CF, distributed by Borealis
   The copolymer has an ethylene content of 3.6 mol% and a xylene cold soluble fraction (EPR content) at RT of 14 wt%. The MFR₂ (230°C; 2.16 kg) is 3.0 g/10 min and a pentad isotacticity of the xylene cold insoluble fraction 98%. The density is 905 kg/m³ and the melting point 167°C. The crystallinity of the xylene cold insoluble fraction as calculated from the melting enthalpy is 59%. The polymer A-1 is produced with Borealis Nucleation Technology (BNT) and contains 0.0004 wt% of poly(vinylcyclohexane) as α-nucleating agent.
   Polymer A-1 was used in Examples 2 and 4.
(A-2) a homopolymer, HC205TF distributed by Borealis
   The homopolymer has an MFR₂ (230°C; 2.16 kg) is 3.8 g/10 min and a pentad isotacticity of the xylene cold insoluble fraction 98%.The density is 906 kg/m³ and the melting point 165°C. The crystallinity of the xylene cold insoluble fraction as calculated from the melting enthalpy is 59%. The polymer A-1 is produced with Borealis Nucleation Technology (BNT) and contains 0.0004 wt% of poly(vinylcyclohexane) as α-nucleating agent.
   Polymer A-2 was used in Examples 1 and 3.

As high melt strength polypropylene (B) the following polymer was used:
(B) multibranched propylene homopolymer, Daploy™ WB180HMS, distributed by Borealis),
   The polymer has a density of 905 kg/m³, a melting point of 165°C. The MFR₂ (230°C; 2.16 kg) is 6.0 g/10 min. The melt strength is 11.5 cN at a maximum speed of 242 mm/s and the branching index g' is 0.64.
   Polymer B was used in Examples 1-4.

As comparative Example, Cellophane MSAT G3 ex Futamura Japan was used.

### 3. Production of films

For all films dry-blends of the respective polymers were pre-mixed on a low-speed tumble mixer and fed directly to the processing equipment.

**Blown films** were produced on a single screw extruder with a barrel diameter of 35 mm and a tubular die of 80 mm diameter x 0.8 mm die gap. Melt temperature was 200°C in the die; the cooling air was at an ambient temperature of 23°C external of the film bubble. A film thickness of 27 µm was adjusted through the ratio between extruder output (10kg/h), blow up ratio (2:1) takeoff speed (20 m/min).

The contents of the used compositions and their properties are shown in table 1 below.

| Example | | | 1 | 2 | 3 | 4 | CE1 |
|---|---|---|---|---|---|---|---|
| | | Polymer type A | A2 | A1 | A2 | A1 | MSAT |
| | | Amount [wt%] | 50 | 50 | 20 | 80 | 100 |
| | | Polymer B [wt%] | 50 | 50 | 80 | 20 | |
| | Film thickness | [µm] | 29 | 28 | 27 | 26 | 20 |
| Optics | Gloss 20° | [%] | 5.5 | 4.9 | 3.1 | 6.2 | 129.2 |
| | Transparency | [%] | 94.6 | 94.6 | 94.7 | 94.6 | 93.8 |
| | Haze | [%] | 24.1 | 28.4 | 33.9 | 19.4 | 4.2 |
| Tensile test MD | Tensile Modulus | [MPa] | 2102.47 | 1940.38 | 2108.16 | 1631.05 | 6241.5 |
| | Tensile stress at yield | [MPa] | 41.07 | 39.87 | 41.11 | 36.41 | 133.06 |
| | Tensile strain at yield | [%] | 3.39 | 4.64 | 3.41 | 10 | 17.81 |
| | Tensile strength | [MPa] | 41.07 | 40.91 | 41.11 | 59.41 | 134.24 |
| | Tensile strain at break | [%] | 14.49 | 203.73 | 7.62 | 568.49 | 18.48 |
| Tensile test TD | Tensile Modulus | [MPa] | 1739.69 | 1658.72 | 1673.35 | 1405.09 | 4614.68 |
| | Tensile stress at yield | [MPa] | 35.38 | 34.48 | 35.61 | 29.74 | 91.05 |
| | Tensile strain at yield | [%] | 3 | 4.08 | 3.42 | 6.49 | 31.29 |
| | Tensile strength | [MPa] | 35.1 | 34.53 | 35.14 | 29.74 | 90.58 |
| | Tensile strain at break | [%] | 4.09 | 8.31 | 3.24 | 78.75 | 31.37 |
| Elmendorfer MD | Tear resistance | [N] | 0.34 | 0.34 | 0.18 | 0.54 | 0.39 |
| w/o notch | Relative TR | [N/mm] | 14.52 | 12.89 | 7.51 | 20.26 | 17.41 |
| Elmendorfer TD | Tear resistance | [N] | 0.22 | 0.224 | 0.15 | 0.68 | 0.66 |
| w/o notch | Relative TR | [N/mm] | 9.12 | 9.93 | 6.5 | 26.09 | 31.74 |

## Claims

**1.** A blown film or a cast film comprising a polypropylene composition comprising
a. 15 to 85 wt% of a highly crystalline polypropylene (A),
b. 15 to 85 wt% of a high melt strength polypropylene (B), and
c. 0.001 to 1.0 wt% of an alpha nucleating agent,
wherein (A) is **characterized by** a melting temperature of more than 158°C, a crystallinity of the xylene cold insoluble fraction of more than 50% as determined by DSC and a pentane isotacticity of the xylene cold insoluble fraction of more than 96 mol% as determined by ¹³C-NMR spectroscopy, and wherein (B) is **characterized by** a branching index g' of less than 0.90.

**2.** A film according to claim 1, wherein the highly crystalline polypropylene is selected from propylene homopolymers or from heterophasic propylene copolymers (AA) comprising
- optionally a prepolymer fraction (A0)
- a propylene homopolymer (A1) as matrix phase;
- a propylene/alpha-olefin copolymer rubber (A2) dispersed in the matrix phase (A1),
the highly crystalline polypropylene being further **characterized by** a melting temperature of more than 160°C and a crystallinity of the xylene cold insoluble fraction of more than 55% as determined by DSC in the second heat, a pentane isotacticity of the xylene cold insoluble fraction of more than 97 mol% as determined by ¹³C-NMR spectroscopy, a density according to ISO 1183-187 of 875 to 925 kg/m³, preferably 900 to 910 kg/m³ and an MFR₂ measured according to ISO 1133, at 230°C and under a load of 2.16 kg of 1 to 20 g/10 min, preferably of 1.5 to 15 g/10 min.

**3.** A film according to claim 1 or 2, wherein the high melt strength polypropylene (B) is a polypropylene homopolymer with a melt strength, as determined in the Rheotens test, of at least 5 cN at a maximum speed of at least 100 mm/s, a branching index g' of less than 0.80, a pentad isotacticity as determined by ¹³C-NMR spectroscopy, of more than 90 mol% and an MFR₂ measured according to ISO 1133, at 230°C and under a load of 2.16 kg of 2 to 20 g/10 min, preferably of 2.5 to 10 g/10 min.

**4.** A film according to any one of the preceding claims, wherein the alpha nucleating agent is selected from the group consisting of sodium benzoate, 1,3:2,4-bis-(3,4-dimethyl-benzylidene)-sorbitol, sodium-2,2'-methylenebis-(4,6-di-tert-butyl-phenyl)-phosphate and hydroxybis-(2,4,8,10-tetra-tert-butyl-6-hydroxy-12h-dibenzo-(d, g) (1,3,2)-dioxaphos-phocin-6-oxidato)-aluminium, or those based on prepolymerization of the catalyst with monomers represented by the following formula 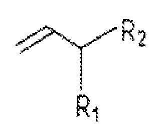 wherein R¹ and R² are independently selected from C₁-C₄-alkyl groups or they form together a saturated, an unsaturated or an aromatic five- or six-membered ring, whereby this ring may be substituted and/or bridged with one or more C₁- or C₂-alkyl groups.

**5.** A film according to claim 4, **characterized in that** component (A) has been alpha-nucleated.

**6.** A film according to any one of the preceding claims, wherein the polypropylene composition has an MFR₂ measured according to ISO 1133, at 230°C and under a load of 2.16 kg of 0.5 to 50 g/10 min, preferably of 1.0 to 30 g/10 min and a content of xylene cold soluble of not more than 20 wt%, preferably not more than 17 wt%.

**7.** A film according to any one of the preceding claims, wherein the film has a thickness 5 to 300 µm.

**8.** A film according to any one of the preceding claims, wherein the film has a transparency of at least 90 % for a thickness of 30µm according to ASTM D1003-00 and a haze of not more than 40 % for a thickness of 30µm according to ASTM D1003-00

**9.** A film according to any one of the preceding claims, wherein the film with a thickness of 20 to 29 µm has relative tear resistance (MD) of not more than 21 N/mm and a relative tear resistance (TD) of not more than 27 N/mm determined by ISO 6383-2 (Elmendorf test), modified in that the film had no precut.

**10.** A film according to any one of the preceding claims, wherein the film with a width of 25 mm and a thickness of 20 to 29 µm according to ISO 527-3 has a tensile modulus (MD) of at least 1400 MPa, a tensile stess at yield (MD) of at least 25 MPa, a tensile strain at break (MD) of not more than 700 % and a tensile modulus (TD) of at least 1300 MPa, a tensile stess at yield (TD) of at least 29 MPa and a tensile strain at break (MD) of not more than 150 %.

**10.** Process for producing a blown film according to any one of the preceding claims comprising the steps of
(i) blowing up a tube of molten material with air perpendicularly to the upwards direction from a side-fed blown film die;
(ii) cooling it down with water contact cooling ring or air quench;
(iii) folding it and guiding it over deflector rolls onto the winder wherein the material is a composition comprising
a. 15 to 85 wt% of a highly crystalline polypropylene (A),
b. 15 to 85 wt% of a high melt strength polypropylene (B), and
c. 0.001 to 1.0 wt% of an alpha nucleating agent,
wherein (A) is **characterized by** a melting temperature of more than 158°C, a crystallinity of the xylene cold insoluble fraction of more than 50% as determined by DSC and a pentane isotacticity of the xylene cold insoluble fraction of more than 96 mol% as determined by ¹³C-NMR spectroscopy, and wherein (B) is **characterized by** a branching index g' of less than 0.90.

**11.** Process for producing a cast film according to any one of the preceding claims comprising the steps of
i) pouring or spreading a solution, hot-melt or dispersion of a material onto a temporary carrier
ii) hardening the material, and
iii) stripping the hardened film from the surface of the carrier
whereby the material is a composition comprising
a. 15 to 85 wt% of a highly crystalline polypropylene (A),
b. 15 to 85 wt% of a high melt strength polypropylene (B), and
c. 0.001 to 1.0 wt% of an alpha nucleating agent,
wherein (A) is **characterized by** a melting temperature of more than 158°C, a crystallinity of the xylene cold insoluble fraction of more than 50% as determined by DSC and a pentane isotacticity of the xylene cold insoluble fraction of more than 96 mol% as determined by ¹³C-NMR spectroscopy, and wherein (B) is **characterized by** a branching index g' of less than 0.90.

**12.** Use of a film according to one of the proceeding claims for packaging films in laminated, multilayer or unlaminated, monolayer structures for food packaging or in medical or pharmaceutical packaging, wherein the film comprises at least one layer of the structure.

**13.** A laminated film construction comprising one layer consisting of a film according to one of the proceeding claims 1 to 11 and at least one aluminium layer.

**14.** Use of a laminated film construction according to claim 13 for medical and pharmaceutical packaging.
